# EUROPEAN PATENT APPLICATION

(11) **EP 4 779 292 A1**
(43) Date of publication of application: **22.07.2026**
(21) Application number: 25190355.5
(22) Date of filing: 18.07.2025
(51) Int. Cl.: G01N 21/05, G01N 21/53, G01N 15/00, G01N 21/47

(54) **SAMPLE CELL ARRANGEMENT, HOLDING DEVICE, SYSTEM COMPRISING THE SAMPLE CELL ARRANGEMENT AND THE HOLDING DEVICE, HOLDING SYSTEM FOR A SAMPLE CELL ARRANGEMENT, AND METHOD FOR ASSEMBLING THE HOLDING SYSTEM**

(71) Applicant: Postnova Analytics GmbH, 86899 Landsberg (DE)
(72) Inventor: Welz, Roland, 86956 Schongau (DE); Brylka, Stephan, 86159 Augsburg (DE)
(74) Representative: Hoffmann Eitle

(57) **Abstract**

A sample cell arrangement comprising a sample cell and a set of optical detectors, wherein the sample cell includes a bore along a diameter of the sample cell, the bore being configured to hold the suspension, the sample cell has an exterior surface, wherein the exterior surface is a surface of revolution about a normal axis normal to a horizontal plane including the bore, and the surface of revolution is a surface of an ellipsoid, and each of the optical detectors is positioned at a position defined by a radius, an azimuthal angle, and a polar angle, wherein the radius is a distance along a radial line connecting a position of an optical detector and a center of the sample cell, the radius being larger than a distance between the center of the sample cell and the exterior surface of the sample cell, the polar angle is an angle between the radial line and a normal line connecting the center of the sample cell and a top pole of the ellipsoid, the azimuthal angle is an angle between a projection line connecting the center of the sample cell and a projection of a position of an optical detector onto the horizontal plane, and a bore line connecting the center of the sample cell and an outlet of the bore.

## Description

Sample cell arrangement, holding device, system comprising the sample cell arrangement and the holding device, holding system for a sample cell, and method for assembling the holding system.

### TECHNICAL FIELD

The present invention relates to a sample cell arrangement, a holding device, a system comprising the sample cell arrangement and the holding device, a holding system for a sample cell, and a method for assembling the holding system.

### TECHNICAL BACKGROUND

Conventional multi-angle light scattering, MALS, techniques use cylindrical sample cells comprising a horizontal bore along the diameter of the sample cell. The bore is configured such that a suspension can flow through the bore. Then, a laser is configured such that a laser beam is aligned with the bore, thereby irradiating the suspension. Thereby, scattered laser light is generated. The scattered laser light is transmitted through the sample cell towards optical detectors that are placed outside of the sample cell. In conventional MALS techniques, these optical detectors are positioned in the same plane as the bore, around the cylindrical sample cell, for example, in a ring-like formation. The optical detectors thus can detect the scattered laser light. Based on the measurement result, for example, the angular distribution of the measured intensity, properties of the constituents of the suspension can be determined.

The determination accuracy of the properties of the constituents depends on the number and placement of optical detectors, i.e. the amount of light received at various angles. An increased number of optical detectors, and an increased number of angles at which intensity is measured, results in more precise measurements of intensity.

However, the maximum number of optical detectors that can be placed within the plane of the bore is limited by the geometric dimensions, length, width, and height of each detector and the sample cell. Moreover, optical detectors should be placed as close as possible to the focal point of the conventional cylindrical sample cell. Placing a larger number of optical detectors at larger distances from the sample cell means that the optical detectors are placed apart from the focal point. Thereby, the measurement accuracy is reduced.

These constraints limit the accuracy of the conventional intensity measurement techniques, and thereby limit the accuracy of determining the properties of constituents of a suspension.

Moreover, devices for performing MALS measurements are usually difficult to assemble, disassemble, and reassemble. This limits their applicability.

### SUMMARY

One of the objects of the present disclosure is to overcome at least one of the above prior art problems or to improve at least one of the prior art solutions. The object is achieved by the subject-matter of the independent claims. Further preferred embodiments are given by the subject-matter of the dependent claims.

### BRIEF DESCRIPTION OF DRAWINGS

Figure 1 shows a first embodiment of a sample cell arrangement;
Figure 2a shows a second embodiment of the sample cell arrangement;
Figure 2b shows an example of measurement data obtained using a sample cell arrangement according to the second embodiment;
Figure 2c shows a comparison of measurement data obtained using one optical detector and a conventional cylindrical sample cell, and measurement data obtained using one optical detector and a sample cell arrangement according to the second embodiment;
Figure 3a shows an example of a fourth embodiment of the sample cell arrangement;
Figure 3b shows an example of measurement data obtained using the sample cell arrangement according to the fourth embodiment;
Figure 4 shows a fifth embodiment of the sample cell arrangement;
Figure 5a shows a sectional view from above a sample cell arrangement according to a sixth embodiment;
Figure 5b shows another sectional view from above a sample cell arrangement according to the sixth embodiment;
Figure 5c shows an example of measurement data obtained using the sample cell arrangement according to the sixth embodiment.
Figure 6 shows an example of a seventh embodiment of a sample cell arrangement according to the present invention;
Figure 7 shows an example of an eighth embodiment of a sample cell arrangement according to the present invention;
Figure 8 shows an example of a holding device according to a tenth embodiment of the present invention;
Figure 9a shows a holding system according to a fourteenth embodiment of the present invention;
Figure 9b shows another example of a holding system according to the fourteenth embodiment;
Figure 10 shows a method for assembling a holding system according to a fifteenth embodiment of the present invention.

### DETAILED DESCRIPTION

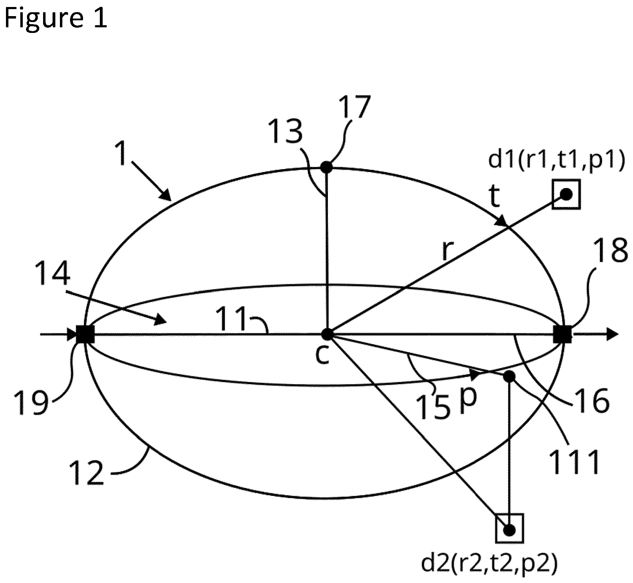

Figure 1 shows a first embodiment of a sample cell arrangement comprising a sample cell 1 and a set of optical detectors d1, d2 wherein the sample cell 1 includes a bore 11 along a diameter of the sample cell 1 the bore 11 being configured to hold the suspension, the sample cell 1 has an exterior surface 12, wherein the exterior surface 12 is a surface of revolution about a normal axis 13, normal to a horizontal plane 14 including the bore 11, and the surface of revolution is a surface of an ellipsoid, and each of the optical detectors d1, d2 is positioned at a position defined by a radius r1 r2, an azimuthal angle p1, p2, and a polar angle t1, t2, wherein the radius is a distance along a radial line r connecting a position of an optical detector (r1,t1,p1) and a center c of the sample cell 1, the radius r1, r2 being larger than a distance between the center c of the sample cell 1 and the exterior surface 12 of the sample cell 1, the polar angle is an angle t between the radial line r and a normal line 13 connecting the center of the sample cell c and a top pole 17 of the ellipsoid, the azimuthal angle is an angle p between a projection line 15 connecting the center of the sample cell c and a projection 111 of a position of an optical detector onto the horizontal plane 14 and a bore line 16 connecting the center of the sample cell c and an outlet 18 of the bore, 11.

The bore 11 may connect an inlet portion 19 and an outlet portion 18 of the sample cell 1. The line 11 that connects the inlet portion 19 and the outlet portion 18 represents the bore 11. The circle in the center of the inner ellipse represents the center, c, of the sample cell 1. The arrow on the left hand side of the inlet portion 19 indicates the flow direction of a suspension that may be inserted into the bore 11 of the sample cell 1 through the inlet portion. The arrow on the right hand side of the outlet portion 18 indicates the flow direction of a suspension that may exit the bore 11 of the sample cell at the outlet portion 18.

The squares d1 and d2 comprising a black circle represent a plurality of optical detectors, namely a first optical detector, d1, and a second optical detector, d2, respectively. The tuples (r1,t1,p1) and (r2,t2,p2) represent a combination of radius, r, polar angle, t, and azimuthal angle, p, that are necessary for defining a position of an optical detector in three dimensional space using spherical coordinates.

In figure 1 the first detector d1 may be assumed to positioned at an azimuthal angle of 0 degrees. The corresponding projection line would thus be collinear with the bore line 16. The corresponding projection line is thus not depicted in figure 1. Instead, figure 1 shows projection line 15 corresponding to a position of the second optical detector, d2.

The arrow labelled p, pointing towards the intersection point of the projection line 15 and the inner ellipse indicates the azimuthal angle, for example, the angle between the bore line 16 and the projection line 15 measured counterclockwise. The values of the azimuthal angle may be selected from a range of 0 degrees to 360 degrees. Alternatively, the values of the azimuthal angle may be selected from a range of 0 degrees to 180 degrees and 0 degrees to -180 degrees.

The arrow labelled t, pointing towards the intersection point of the radial line r and the outer ellipse 12 indicates the polar angle, for example, the angle between the normal line 13 and the radial line r measured starting from the normal line 13. The values of the polar angle may be selected from a range of 0 degrees to 180 degrees.

A set of optical detectors may refer to a plurality of optical detectors, or at least two optical detectors, or to a number of optical detectors equal to or larger than two.

A sample cell may refer to a device configured to hold or to contain a sample. The sample may be dissolved in a suspension. The sample cell may hold the suspension within the bore. The bore 11 may be configured such that the suspension can held in the bore, or can flow through the bore 11. The sample cell may comprise a cell body. The cell body may be configured to form a holding-volume. The holding-volume may be the bore. The sample or the suspension may be held in the holding-volume. The cell body may have an exterior surface. This exterior surface may define the shape and the outer limits of the cell body, or the sample cell. For example, if the exterior surface is an ellipsoid, the sample cell may have an ellipsoidal cell body. The sample cell may have an ellipsoidal shape. The ellipsoid may be a spheroid, more specifically, an oblate spheroid, or a prolate spheroid. One semi axis, or two semi axes may coincide with the normal line 13, or the bore line 16. For example, a first semi axis of the ellipsoid may coincide with the normal line 13. For example, a second semi axis of the ellipsoid may coincide with the bore line 16.

The sample cell or the cell body may be made of a variety of materials. For example, the cell body may be made of, may comprise, or may consist of fused silica, crown glass, or flint glass.

An optical detector may be a device configured to detect or to count a number of photons received at an area over a time interval. A number of photons counted over a time interval may be referred to as a photocurrent, a photon count rate, a count rate, or an intensity. An optical detector may comprise a detection surface. The detection surface may be a circle, a rectangle, or a square. For example, a diameter of a circle may be selected from a range from 10 millimeter to 20 millimeters. An optical detector may count photons by absorbing a photon and generating a corresponding electrical current. For example, an electrical current may be output by an optical detector in units of ampere or volts. A specific example of an optical detector is a photo diode. Other examples comprise a phototransistor, a charge-coupled device, a photomultiplier, a bolometer, an avalanche photodiode.

An optical detector may be replaced by a detector of other types of detectors.

A horizontal plane may be referred to as a flat, non-curved, two-dimensional surface. The horizontal plane includes the bore. In other words, the bore may lie in the horizontal plane, the bore may be contained in the horizontal plane, the bore may be coplanar with the horizontal plane.

The center of the sample cell c may correspond to the geometrical center of the surface of revolution, for example, the ellipsoid. A center of an ellipsoid may be defined as the point that is equidistant from all opposite pairs of surface points along the principal axes of the ellipsoid, or the point at which all three semi-axes of the ellipsoid intersect, or the geometric center of the ellipsoidal body, or the centroid of the ellipsoidal body. A center of a sphere may be referred to as the point that is equidistant from every point on the surface of the sphere.

The azimuthal angle may be measured starting from the outlet of the bore in a counterclockwise manner. The azimuthal angle may assume a value ranging from 0 to 360 degrees. The azimuthal angle may be selected from a range of 0 to 360 degrees. In MALS techniques, azimuthal angles may be denoted based on a range of 0 to 180 degrees. For example, an initial range of 0 to 360 degrees, which corresponds to the mentioned degree-values that an azimuthal angle can assume, may be represented by a first range of 0 to 180 degrees which corresponds to an initial range of 0 to 180 degrees counter clockwise, and a second range of 0 to 180 degrees clockwise which corresponds to the part of initial range spanning 360 to 180 degrees. For example, 90 degrees of the second range may correspond to 270 degrees of the initial range. 135 degrees of the second range may correspond to 225 degrees of the initial range. 45 degrees of the second range may correspond to 315 degrees of the initial range. Alternatively, the second range may be expressed as -0 to -180 degrees. For example, -90 degrees may correspond to an azimuthal angle of 90 degrees counted in a clockwise direction.

The polar angle may assume a value ranging from 0 to 180 degrees. The polar angle may also be defined with respect to the horizontal plane. For example, the polar angle may be an angle between a radial line, defined as discussed above and below, assigned to a respective optical detector and a respective projection line. The polar angle may be measured in a clockwise or counterclockwise manner starting from the projection line. For example, an initial range of 0 to 180 degrees may be expressed as a first range of 0 to 90 degrees and a second range of 0 to -90 degrees. The first range may correspond to a range of possible values of a polar angle defined as an angle between the projection line and the normal line as discussed above. The second range may correspond to a range of possible values of a polar angle defined as an angle between the projection line and another normal line connecting the center of the sample and a bottom pole, or south pole, of an ellipsoid. For example, +7 degrees in the first range may correspond to 83 degrees in the framework of the range is initially mentioned, and -7 degrees in the second range may correspond to 97 degrees in the framework of the range as initially mentioned.

The horizontal plane may be referred to as an equatorial plane with a polar angle equal to 90 degree and containing the origin of the sample cell.

A projection of a position of an optical detector onto the horizontal plane may refer to a position obtained by dropping the position of the optical detector vertically, along the normal axis, onto the horizontal plane. For example, in cartesian coordinates, the projection of the position of an optical detector may be expressed as (x,y,z) = (r sin(t) cos(p), r sin(t) sin(p),0), wherein the center of the cartesian coordinate system coincides with the center of the sample cell, r denotes the radius, t denotes the polar angle and p denotes the azimuthal angle.

Moreover, according to the present embodiment, the radius r1, r2 is larger than a distance between the center c of the sample cell 1 and the exterior surface 12 of the sample cell 1. In other words, the radius may be chosen such that a corresponding optical detector is positioned outside of the body of the sample cell. For example, a respective radius may be selected from a range of 28 millimeters to 65 millimeters, preferably 38 millimeters to 55 millimeters. For example, the radius may be 46.5 millimeters.

The diameter of the sample cell may be selected from a range of 20 millimeters to 40 millimeters, preferably 25 millimeters to 35 millimeters. For example, the diameter of the sample cell may be 28 millimeters.

By placing an optical detector at a position defined by a radius as defined above, the detection area of the optical detector is placed close to the focus point of the sample cell. Thereby, more scattered light can be detected by the optical detector. This improves the measurement accuracy of the system.

In this embodiment, a laser may be positioned at, or its laser beam may be guided to the inlet portion of the bore such that a laser beam emitted by the laser is collinear or coincides with the flow direction of the suspension along the bore. In other words, the laser beam enters the bore at the inlet portion and exits the bore at the outlet portion.

Thanks to the solution according to the first embodiment, at least two optical detectors can be placed alongside a sample cell having an ellipsoidal surface. In comparison to conventional cylindrical sample cell configurations, the geometrical properties of the ellipsoidal surface result in that the sample cell focusses the light scattered at the suspension more efficiently on the optical detectors placed outside of the sample cell. Thereby, a measured maximum signal and a corresponding signal to noise ratio can be increased.

Any part of the above embodiment or any detail discussed with respect to the above embodiments may be combined with any part of the below embodiments.

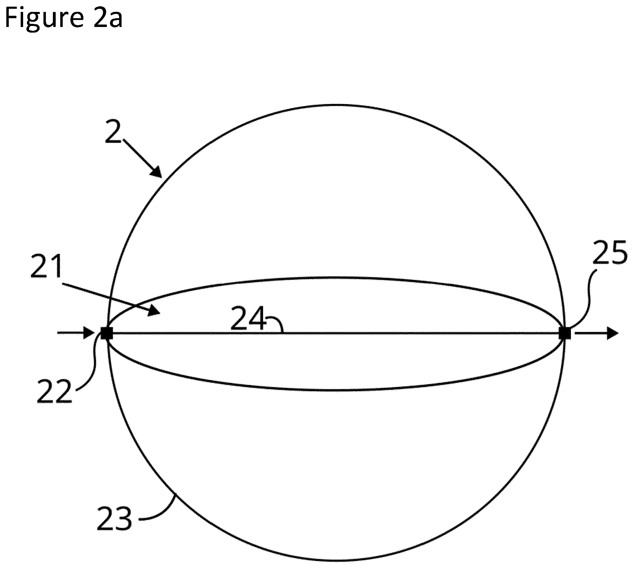

Figure 2a shows an example of a second embodiment of a sample cell arrangement according to the first embodiment, wherein the exterior surface is a surface of a sphere.

Figure 2a shows the sample cell 2, the bore 24, the inlet portion 22 and the outlet portion 25, the horizontal plane 21 and the exterior surface of the sample cell 23.

With regards to this embodiment, the concepts and details as discussed above for the first embodiment may be combined with the second embodiment.

In comparison to the first embodiment, the second embodiment specifies that the ellipsoid of the first embodiment is a sphere. In other words, the surface of revolution of the sample cell is a sphere. A sphere may be referred to as an ellipsoid, wherein each of the semi axes of the ellipsoid have the same length.

A spherical exterior surface improves the refraction characteristics of the sample cell. Specifically, laser light may be scattered at the suspension in the bore. The scattered laser light then may pass through the sample cell and may be refracted at the exterior surface of the sample cell. Usually, the scattered laser light forms a beam centered in the horizontal plane. Other exterior surfaces of a sample cell, such as a cylindrical surface, widen the beam of scattered light. Because of the spherical exterior surface, the beam widening of the refracted light beam is reduced. Thus, more refracted laser light can be measured at optical detectors positioned close to or within the horizontal plane. Thereby, the measured signal intensity and the signal to noise ratio can be improved.

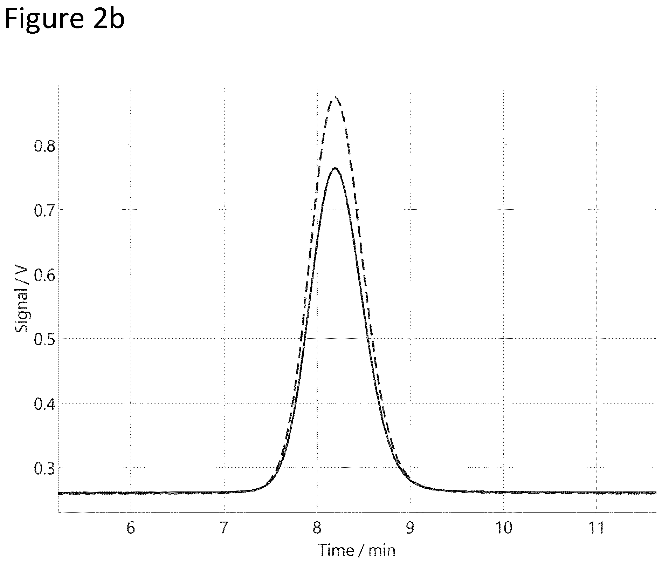

Figure 2b shows an example of measurement data obtained using a sample cell arrangement according to the present embodiment. The data obtained using a first optical detector is shown as a dashed line. The data obtained using a second optical detector is shown as a solid, unbroken line. The first optical detector may be placed at an azimuthal angle of 60 degrees and a polar angle of 83 degrees. The second optical detector may be placed at an azimuthal angle of 90 degrees and a polar angle of 97 degrees.

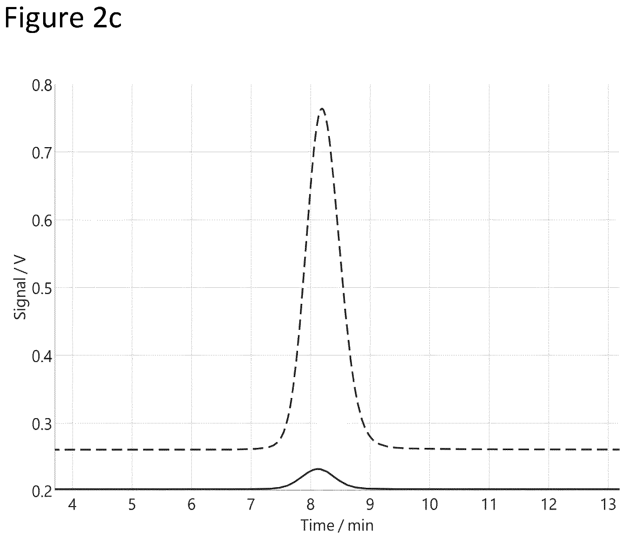

Figure 2c shows a comparison of measurement data obtained using one optical detector and a conventional cylindrical sample cell, and measurement data obtained using one optical detector and a sample cell arrangement according to the present embodiment. The data obtained using the spherical sample cell according to the present embodiment is shown as a dashed line and was obtained by an optical detector placed at an azimuthal angle of 90 degrees and a polar angle of 90 degrees. The data obtained using the cylindrical sample cell is shown as solid line and was obtained by an optical detector positioned outside of the cylindrical sample cell, and positioned perpendicular to the center, or the midpoint, of the bore of the cylindrical sample cell, and positioned within a plane containing the bore of the cylindrical sample cell. As shown, the measured intensity values can be improved. The signal to noise ratio is improved, as well.
Any part of the above embodiment or any detail discussed with respect to the above embodiments may be combined with any part of the below embodiments.
A third embodiment comprises the sample cell arrangement of any one of the first embodiment and the second embodiment wherein the set of optical detectors comprises a first subset of optical detectors, and a second subset of optical detectors, wherein, preferably, the number of optical detectors included in the first subset is equal to the number of optical detectors included in the second subset.

The set of optical detectors may comprise the first subset of optical detectors and the second subset of optical detectors. A subset may be referred to as a plurality of optical detectors, or to a number of optical detectors. The number of optical detectors included in a subset may be smaller than the number of optical detectors included in the set of optical detectors. The sum of the number of optical detectors included in the first subset and the number of optical detectors included in the second subset may be equal to the number of optical detectors in set of optical detectors. The number of optical detectors included in the first subset may be equal to the number of optical detectors included in the second subset. The number of optical detectors included in the first subset may be different from the number of optical detectors included in the second subset.

Dividing the set of optical detectors in two separate subsets allows for positioning the optical detectors in groups more easily.

Any part of the above embodiment or any detail discussed with respect to the above embodiments may be combined with any part of the below embodiments.

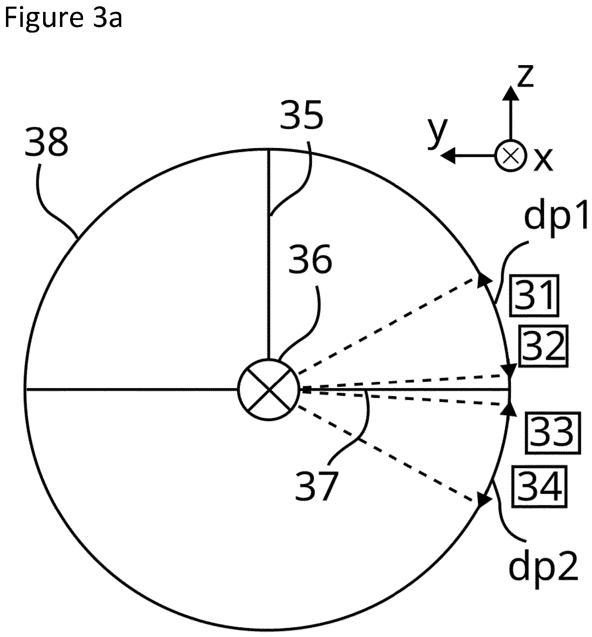

Figure 3a shows an example of a fourth embodiment comprising the sample cell arrangement of the third embodiment, wherein the polar angle defining the position of each of the optical detectors included in the first subset 31, 32 is selected from a range dp1 of 70 degrees to 88 degrees, preferably 80 degrees to 86 degrees, most preferably 82 degrees to 84 degrees, and the polar angle defining the position of each of the optical detectors included in the second subset 33, 34, is selected from a range dp2 of 92 degrees to 110 degrees, preferably 94 degrees to 100 degrees, most preferably 96 degrees to 98 degrees.

Figure 3a depicts a vertical sectional view through the center of the sample cell 48, including the bore 36, the normal line 35, and the horizontal plane 37. The bore is represented as a circle with a cross. This indicates that the sample cell is viewed in the direction of fluid flow inside the bore. In other words, the sample cell is viewed from a position at the inlet portion of the bore, and in the direction of the outlet portion of the bore.

According to this embodiment, a polar angle defining a position of optical detectors included in either the first or the second subset is selected. Here, a polar angle may be selected for each optical detector individually. For example, a position of a first optical detector 31 may be defined by a polar angle of 75 degrees and a position of a second optical detector 32 may be defined by a polar angle of 78 degrees. In this case, optical detectors included in a respective subset may be placed at the same azimuthal angle, or the optical detectors in a respective subset may be placed at different azimuthal angles. Moreover, one polar angle may be selected for all optical detectors included in a respective subset. For example, the second subset may comprise a third optical detector 33 and a fourth optical detector 34. Then, the same polar angle, for example, 75 degrees may be selected for both detectors included in the second subset. If one polar angle is selected for all optical detectors included in a subset, the optical detectors included in a respective subset may be placed apart from each other in the azimuthal direction, at different azimuthal angles.

Selecting a polar angle from a range may mean that a polar angle is set to one value out of the range.

In general, light is scattered at the constituents of the suspension that is held by the bore. The intensity of the scattered light increases towards a maximum at the polar angle of 90 degrees. Thanks to the present embodiment, by placing a plurality of optical detectors close to this maximum, the absolute intensity measured by the plurality of detectors may be increased.

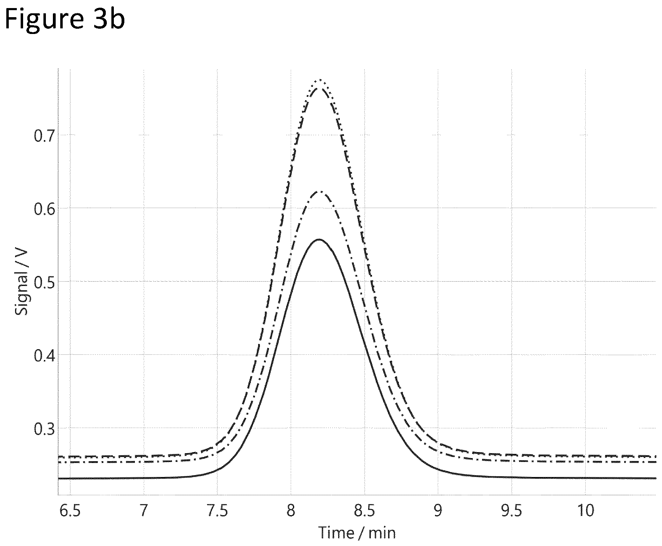

Figure 3b shows an example of measurement data obtained using the sample cell arrangement according to the present embodiment. Each line represents measurement data obtained using a respective optical detector. The dotted line represents measurement data obtained by an optical detector placed at an azimuthal angle of 121 degrees and a polar angle of 97 degrees. The dashed line represents measurement data obtained by an optical detector placed at an azimuthal angle of 90 degrees and a polar angle of 83 degrees. The dash-dot line represents measurement data obtained by an optical detector placed at an azimuthal angle of 37 degrees and a polar angle of 97 degrees. The solid, unbroken line represents measurement data obtained by an optical detector placed at an azimuthal angle of 44 degrees and a polar angle of 83 degrees.

As shown, the present embodiment allows for obtaining a plurality of measurement data at various angles, thereby improving the measurement accuracy of properties of constituents of the sample in the suspension that are obtained by analyzing the measurement data.

Any part of the above embodiment or any detail discussed with respect to the above embodiments may be combined with any part of the below embodiments.

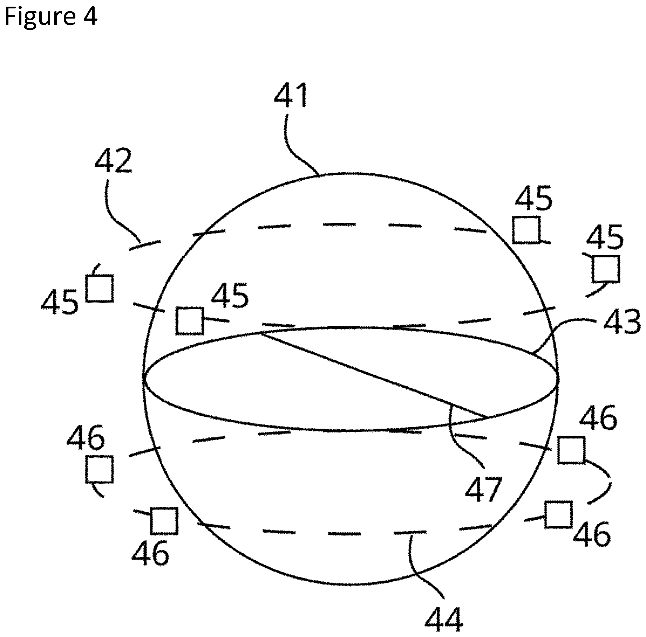

Figure 4 shows a fifth embodiment of a sample cell arrangement comprising the sample cell arrangement of any one of the third embodiment and the fourth embodiment, wherein the optical detectors included in the first subset of optical detectors 45, are placed along a first ring 42, defined by a fixed first radius, a fixed first polar angle, and a variable azimuthal angle, and the optical detectors included in the second subset of optical detectors 46, are placed along a second ring 44, defined by a fixed second radius, a fixed second polar angle, and a variable azimuthal angle.

Figure 4 furthermore depicts the sample cell 41, the bore 47, and the horizontal plane 43.

The term fixed may be rephrased as constant, pre-defined, not changing. The term along may be rephrased as alongside, next to, near to, besides, on.

A fixed radius may mean that the radius defining the position of each optical detector included in a respective subset of optical detectors is the same.

A fixed polar angle may mean that the polar angle defining the position of each optical detector included in a respective subset of optical detectors is the same. For example, each optical detector included in the first subset of optical detectors may be positioned at a polar angle of 83 degrees. For example, each optical detector included in the second subset of optical detectors may be positioned at a polar angle of 97 degrees.

A variable azimuthal angle may mean that the azimuthal angle may take on each value between 0 and 360 degrees, thereby forming a closed line in the form of a ring.

The first radius and the second radius may be the same. In other words, the value of the first radius may be equal to the value of the second radius. The first radius and the second radius may not be the same. In other words, the value of the first radius may not be equal to the value of the second radius.

The first polar angle and the second polar angle may not be the same. In other words, the value of the first polar angle may not be equal to the value of the second polar angle. Stated differently, the value of the first polar angle may differ from the value of the second polar angle.

The first ring or the second ring may be an imaginary ring used for defining the positions of the optical detectors. The first ring or the second ring may be a device configured to hold the optical detectors.

The position of an optical detector may be defined by a respective combination of a fixed radius, fixed a polar angle, and one specific azimuthal angle. For example, the first subset optical detectors may comprise four detectors. The position of the first detector may be defined by an azimuthal angle of 45 degrees. The position of the second detector may be defined by an azimuthal angle of 135 degrees. The position of the third detector may be defined by an azimuthal angle of 225 degrees. The position of the fourth detector may be defined by an azimuthal angle of 315 degrees. For example, the second subset optical detectors may comprise four detectors. The position of the first detector may be defined by an azimuthal angle of 80 degrees. The position of the second detector may be defined by an azimuthal angle of 100 degrees. The position of the third detector may be defined by an azimuthal angle of 260 degrees. The position of the fourth detector may be defined by an azimuthal angle of 280 degrees.

Thanks to this embodiment, a large number of optical detectors may be placed around the sample cell, thereby improving the measurement accuracy of the sample cell arrangement.

Any part of the above embodiment or any detail discussed with respect to the above embodiments may be combined with any part of the below embodiments.

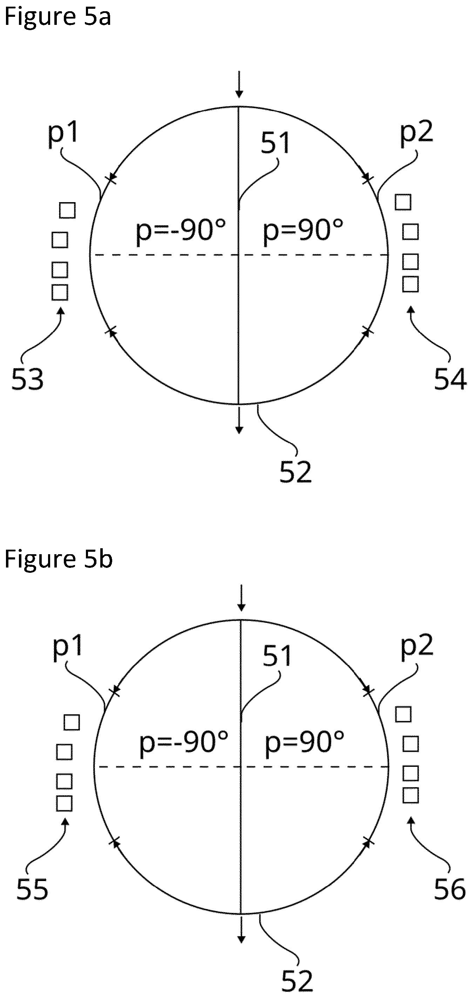

Figures 5a and 5b show examples according to a sixth embodiment of the present invention comprising the sample cell arrangement of any one of the third or the fourth embodiment, wherein the azimuthal angle defining the position of each of the optical detectors included in the first subset of optical detectors 53, 54 is selected from a range p1, p2 of 10 degrees to 170 degrees and -10 degrees to -170 degrees, preferably 50 degrees to 130 degrees and -50 degrees to -130 degrees, most preferably 70 to 110 degrees and -70 degrees to -110 degrees, and the azimuthal angle defining the position of each of the optical detectors included in the second subset of optical detectors 55, 56 is selected from a range p1, p2 of 10 degrees to 170 degrees and -10 degrees to -170 degrees, preferably 50 degrees to 130 degrees and -50 degrees to -130 degrees, most preferably 70 to 110 degrees and -70 degrees to -110 degrees.

Figures 5a and 5b show a sectional view from above on the sample cell arrangement. The sectional view shows a cut through the sample cell 52 at varying polar angles. For example, Figure 5a may show a sectional view through the sample cell at a polar angle of +83 degrees. For example, Figure 5b may show another sectional view through the sample cell at a polar angle of +97 degrees. Other polar angles may be chosen, as discussed throughout the above embodiment, for example, the third embodiment.

The groups of squares 53, 54, represent optical detectors included in the first subset. The groups of squares 55, 56, represent optical detectors included in the second subset.

The ranges p1, p2 are represented as parts of the circle representing the sample cell, wherein the bounds are depicted as arrows.

The sectional view shows the bore 51, wherein two arrows depict the flow direction of the suspension that may flow within the bore. Specifically, the top arrow indicates that the suspension may be inserted into the bore at the bottom part of the bore. The inlet of the bore may be at the top intersection of the line representing the bore and the circle representing the sample cell. Moreover, the bottom arrow indicates that the suspension may flow out of the bore at the bottom part of the bore. The outlet of the bore may be at the bottom intersection of the line representing the bore intersecting the circle representing the sample cell.

The intersections of the dashed lines with the circle representing the sample cell may represent configurations where the value of the azimuthal angle is +90 degrees or -90 degrees. As discussed throughout the above embodiments, the azimuthal angle may be defined with respect to the bore line and be measured in a counterclockwise direction. The bore line may be defined as connecting the center of the sample cell and an outlet of the bore. Therefore, the azimuthal angle being -90 degrees may also be expressed as the value of the azimuthal angle being +270 degrees. Moreover, the range of -10 degrees to -170 degrees may be expressed as a range of +190 degrees to +350 degrees, or a range of 10 degrees to 170 degrees, if counted in a clockwise direction. Moreover, a range of -50 degrees to -130 degrees may be expressed as a range of +230 to +310 degrees, or a range of 50 degrees to 130 degrees, if counted in a clockwise direction. Moreover, a range of -70 degrees to -110 degrees may be expressed as +250 degrees to +290 degrees, or a range of 70 degrees to 110 degrees, if counted in a clockwise direction. In figures 5a and 5b the bounds of the respective ranges p1 and p2 are represented by black arrows.

According to the sixth embodiment, the optical detectors are placed at azimuthal positions where the intensity of the scattered is close to or is maximum. Thereby, as an advantage, the measured intensity can be increased. This leads to improved determination accuracy of properties of the suspension.

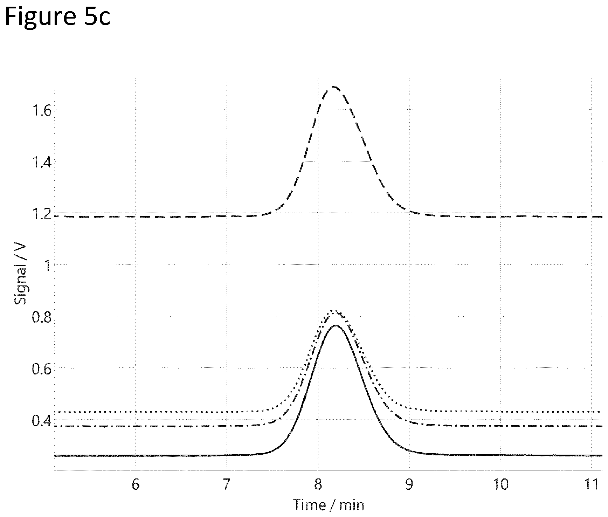

Figure 5c shows an example of measurement data obtained using the sample cell arrangement according to the present embodiment. Each line represents measurement data obtained using an optical detector at a respective position. The dashed line represents measurement data obtained by an optical detector placed at an azimuthal angle of 32 degrees and a polar angle of 97 degrees. The dotted line represents measurement data obtained by an optical detector placed at an azimuthal angle of 150 degrees and a polar angle of 97 degrees. The dash-dot line represents measurement data obtained by an optical detector placed at an azimuthal angle of 37 degrees and a polar angle of 83 degrees. The solid, unbroken line represents measurement data of an optical detector placed at an azimuthal angle of 90 degrees and a polar angle of 83 degrees.

Any part of the above embodiment or any detail discussed with respect to the above embodiments may be combined with any part of the below embodiments.

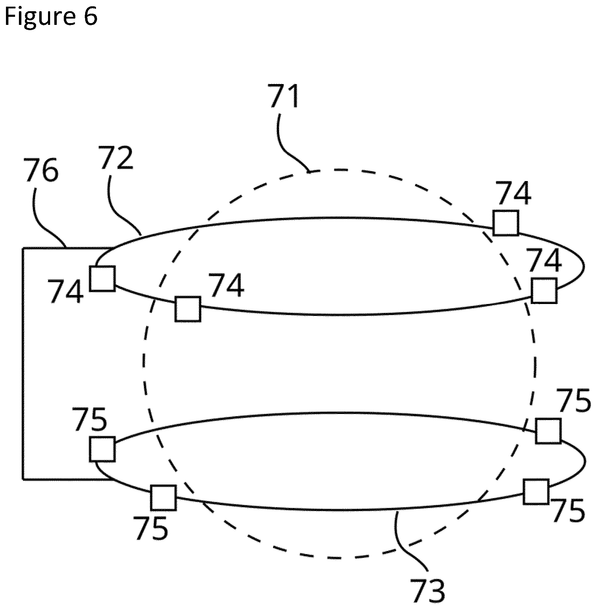

Figure 6 shows an example of a seventh embodiment of a sample cell arrangement according to the present invention comprising the sample cell arrangement of any one of the third embodiment to the sixth embodiment, further comprising a first mounting 72, holding the first subset of optical detectors 74, and a second mounting 73, holding the second subset of optical detectors 75, wherein the first mounting 72, is a part of a holding device, 76, and the second mounting 73, is a part of the holding device 76.

A mounting may refer to a supportive structure or base configured to be connected to, or to hold a plurality of optical detectors. The mounting may comprise a plurality of capsules, or pods wherein each capsule, or pod is configured such that it can hold one optical detector. An optical detector may be inserted into a respective capsule. The pods may be configured such that a detection area of an optical detector, after it was inserted into a pod, is automatically aligned with the center of the sample cell. In other words, the detection area may be perpendicular to a line connecting the optical detector and the center of the sample cell.

A holding device may be a device including a plurality of connection points, wherein a respective mounting can be connected to the holding device by attaching the mounting to the connection points. Thereby, the mounting becomes a part of the holding device. For example, a connection point may be a thread. Moreover, a mounting may comprise a thread. The mounting may be connected to the holding device by screwing a screw through the thread of the mounting into the thread of the connection point included in the holding device.

Thanks to the solution of the seventh embodiment, the positions of the optical detectors are stabilized by the mountings that are part of a holding device.

Any part of the above embodiment or any detail discussed with respect to the above embodiments may be combined with any part of the below embodiments.

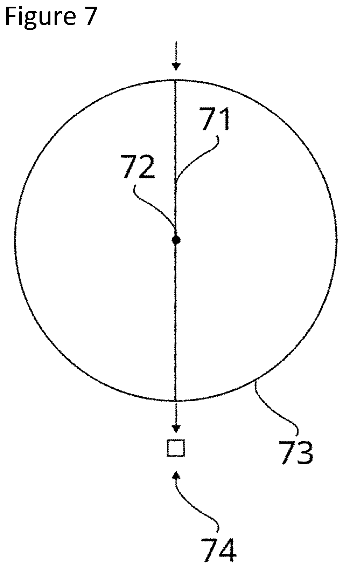

Figure 7 shows an example of an eighth embodiment of a sample cell arrangement according to the present invention comprising the sample cell arrangement of one of the first to the seventh embodiment, further comprising another optical detector 74, wherein the azimuthal angle that defines the position of the other optical detector is substantially 0 degrees, the polar angle that defines the position of the other optical detector is substantially 90 degrees, and the radius is larger than a distance between the center of the sample cell 72, and the exterior surface of the sample cell 73.

Figure 7 shows a cross sectional view of the sample cell along the horizontal plane. Figure 7 furthermore shows a bore 71 as discussed throughout any one of the other embodiments.

As shown, the other optical detector is placed at the outlet of the bore. As the detection area of the optical detector may be perpendicular to the beam axis of the laser. The beam axis of the laser may be collinear with the bore axis.

Thereby, the optical detector may measure the background intensity of the laser light after being transmitted through the bore and being scattered at the suspension that is held in the bore. Thereby, as an advantage, the measurement results of the optical detectors may be improved. For example, the light intensity measured at the other optical detector may be subtracted from the light intensity measurement values detected by the plurality of optical detectors, the first subset of optical detectors, or the second subset of optical detectors. Thereby, the accuracy of the measurement results of the plurality of optical detectors may be improved.

Any part of the above embodiment or any detail discussed with respect to the above embodiments may be combined with any part of the below embodiments.
A ninth embodiment of the present invention comprises the sample arrangement of any one of the first embodiment to the eighth embodiment, wherein the diameter of the bore is selected from a range of 0.5 millimeters to 3.0 millimeters, preferably 0.8 millimeters to 1.2 millimeters.

The bore may be cylindrical, wherein the cylinder axis may connect the inlet of the bore and the outlet of the bore. The diameter of the bore may be the diameter of the cylinder, wherein the diameter may refer to a length of a straight line connecting two opposing points and passing through the center of cylinder. The diameter may be two times the radius of the cylindrical bore.

A smaller volume of the bore, corresponding to smaller diameters such as the ones above, result in decreased band widening of the measured data. Decreased band widening means that fewer computations need to be made when processing and analyzing the measured data. Therefore, thanks to this embodiment the number of computations necessary for analyzing measured data can be reduced.

Any part of the above embodiment or any detail discussed with respect to the above embodiments may be combined with any part of the below embodiments.

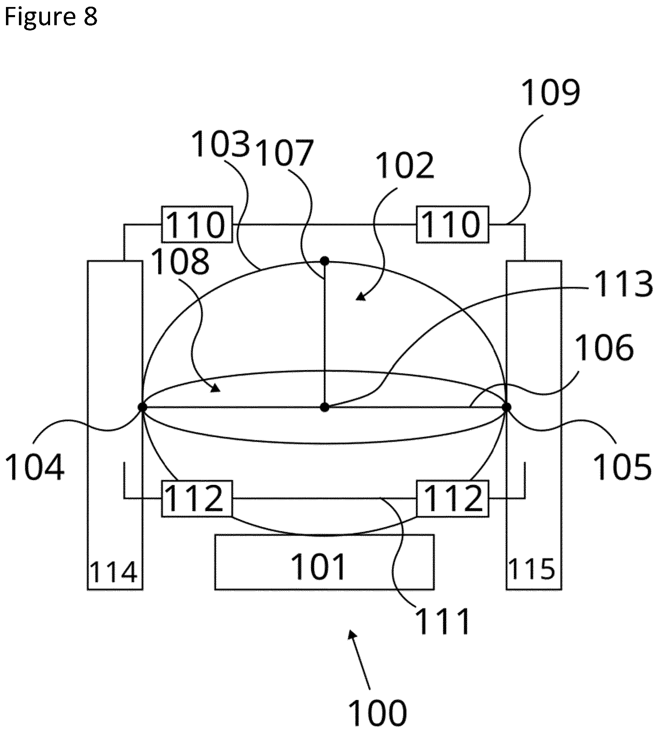

Figure 8 shows an example of a holding device according to a tenth embodiment of the present invention providing a holding device 100 comprising retaining means 101 for holding a sample cell 102, the sample cell having an exterior surface 103 wherein the exterior surface is a surface of an ellipsoid, an inlet 104 for inserting a suspension into a bore of the sample cell, and an outlet 105 for receiving the suspension out of the bore of the sample cell, the position of the inlet and the position of the outlet defining a straight bore line 106 connecting the inlet and the outlet, and a normal axis 107 normal to a horizontal plane 108 containing the bore line, a first mounting 109 for holding a first subset of optical detectors 110, wherein the first mounting is configured such that each of the optical detectors included in the first subset can be held at a respective position defined by a radius, an azimuthal angle, and a polar angle, and a second mounting 111 for holding a second subset of optical detectors 112, wherein the second mounting is configured such that each of the optical detectors included in the second subset can be held at a respective position defined by a radius, an azimuthal angle, and a polar angle, wherein the radius is a distance along a radial line connecting a position of an optical detector and a center 113 of the bore line, the radius is larger than a distance between the center of the bore line and the exterior surface of the sample cell, the polar angle is an angle between the radial line and the normal axis, the azimuthal angle is an angle between a projection line connecting the center of the bore line and a projection of a position of an optical detector onto the horizontal plane, and a line connecting the center of the bore line and the outlet.

Retaining means 101 for holding a sample cell may refer to a device that is configured such that it retains a sample cell at a fixed position, after the sample cell was placed on it. For example, the geometric properties of the retaining means may be adapted to the exterior surface of the sample cell such that the center of gravity of the sample cell is fixed at one position. The fixing of the center of gravity of the sample cell may be achieved by gravitational forces and the geometry of the retaining means.

For example, the retaining means may comprise at least three support rods. The three support rods may be positioned in parallel to each other and spaced apart from each other. The upper ends of the support rods may end in one horizontal plane. Thereby, the three support rods may form a triangle-shaped placing field, wherein, if the sample cell is positioned on top of this placing field, the sample cell is automatically positioned by gravity such that the center of gravity of sample cell is positioned above the centroid of the placing field.

As another example, a retaining means may be a cuboidal device, comprising a concave circular cavity or a concave ellipsoidal cavity on one of its faces. Alternatively, a retaining means may be a cylindrical device, comprising a concave circular cavity or a concave ellipsoidal cavity on one of its circular faces. Alternatively, the retaining means may be a ring. Thereby, when placing a sample cell having a spherical or ellipsoidal exterior surface on the cavity, the center of gravity of the sample cell is automatically aligned by gravitational forces to the centroid of the cuboidal device, the cylindrical device, or the ring. Thereby, the center of gravity of the sample cell is aligned such that it coincides with the center of the respective cavity.

A sample cell 102 according to this embodiment may be a sample cell as discussed throughout the above embodiments.

An exterior surface 103 according to this embodiment may be an exterior surface as discussed throughout the above embodiments.

An inlet 104 may be a device or a part of a device configured such that a fluid or suspension can be inserted from the device into a bore of a sample cell that may be placed on the retaining means. For example, the inlet may be an end, port, or outlet of a tube or a hose. The tube or hose may be a part of a first fixing part 114. The inlet may be a bore in the first fixing part 114. The first fixing part may be connectable, or attachable to the first mounting 109 and the second mounting 111.

An outlet 105 may be a device or a part of a device configured such that a fluid or suspension can be inserted from the bore of sample cell that may be placed on the retaining into the device. For example, the outlet may be end, port, or inlet of a tube or a hose. The tube or hose may be a part of a second fixing part 115. The outlet may be a bore in the second fixing part 115. The second fixing part 115, may be connectable, or attachable to the first mounting 109 and the second mounting 111.

Herein, attaching or connecting the first mounting or the second mounting to the first fixing part or the second fixing part may mean that a respective mounting is physically attached to the fixing part such that the mounting remains in a fixed relative position to the fixing part. For example, a respective fixing part may comprise a screw thread, and a respective mounting may comprise a screw thread. Then the fixing part and the mounting may be connected by inserting a screw through the threads. Thereby, the relative positioning of the mounting and the fixing part may be fastened, anchored, or locked into place.

If the sample cell is placed on the retaining means, a straight bore line 106 may be coincide with the bore of the sample cell.

The normal axis 107 may have the same properties or may correspond to the normal axis as discussed throughout the above embodiments. If the sample cell is placed on the retaining means, the normal axis 107 and the normal axis of the above embodiments, for example, of first embodiment may be coincident lines.

The horizontal plane 108 may have the same properties or may correspond to the horizontal plane as discussed throughout the above embodiments. If the sample cell is placed on the retaining means, the horizontal plane 108 may coincide with the horizontal plane discussed throughout the above embodiments, for example, of the first embodiment.

The first mounting 109 or the second mounting 111 may be a mounting as discussed throughout the above embodiments.

The first subset of optical detectors 110 may be a first subset of optical detectors as discussed throughout the above embodiments.

The second subset of optical detectors 112 may be a second subset of optical detectors as discussed throughout the above embodiments.

An optical detector according to this embodiment may be an optical detector as discussed throughout the above embodiments.

The center 113 of the bore line 106 may be a midpoint between the two endpoints of the bore line. For example, the center may be the midpoint between the inlet 104 and the outlet 105. In different words, the center of the bore line may be the point that is halfway between the inlet 104 and the outlet 105. The center of the bore line may be the center of sample cell.

If a sample cell is placed in the retaining means, the radius may correspond to the radius as discussed throughout the above embodiments.

If a sample cell is placed in the retaining means, the azimuthal angle may correspond to the azimuthal angle as discussed throughout the above embodiments.

If a sample cell is placed in the retaining means, the polar angle may correspond to the polar angle as discussed throughout the above embodiments.

Thanks to this embodiment a holding device is provided that can be connected to a sample cell arrangement, thereby stabilizing the positions of the optical detectors during measurements, which results in improved measurement accuracy.

Any part of the above embodiment or any detail discussed with respect to the above embodiments may be combined with any part of the below embodiments.
An eleventh embodiment of the present invention comprises the holding device of the tenth embodiment, wherein the polar angle defining the position of each of the optical detectors included in the first subset is selected from a range of 70 degrees to 88 degrees, preferably 80 degrees to 86 degrees, most preferably 82 degrees to 84 degrees, and the polar angle defining the position of each of the optical detectors included in the second subset is selected from a range of 92 degrees to 110 degrees, preferably 94 degrees to 100 degrees, most preferably 96 degrees to 98 degrees.

The definitions of the polar angles and ranges out of which the polar angles are selected, and the resulting technical advantages may correspond to the specifications as discussed as the fourth embodiment, or any other embodiment discussed above.

The scattered light intensity is maximum or near maximum close to the horizontal plane at a polar angle of 90 degrees. Thus, as an advantage of the present embodiment, positioning the optical detectors close to the horizontal plane improves the measurement accuracy.

Any part of the above embodiment or any detail discussed with respect to the above embodiments may be combined with any part of the below embodiments.
A twelfth embodiment of the present invention comprises the holding device of any one of the tenth embodiment and the eleventh embodiment, wherein the azimuthal angle defining the position of each of the optical detectors included in the first subset of optical detectors is selected from a range of 10 degrees to 170 degrees and -10 degrees to -170 degrees, preferably 50 degrees to 130 degrees and -50 degrees to -130 degrees, most preferably 70 to 110 degrees and -70 degrees to -110 degrees, and the azimuthal angle defining the position of each of the optical detectors included in the second subset of optical detectors is selected from a range of 10 degrees to 170 degrees and -10 degrees to -170 degrees, preferably 50 degrees to 130 degrees and -50 degrees to -130 degrees, most preferably 70 to 110 degrees and -70 degrees to -110 degrees.

The definitions of the azimuthal angles and ranges out of which the azimuthal angles are selected, and the resulting technical advantages may correspond to the specifications as discussed as the sixth embodiment, or any other embodiment discussed above.

The scattered light intensity is maximum or near maximum close to an azimuthal angle of 90 degrees or 270 degrees. Thus, as an advantage of the present embodiment, positioning the optical detectors close to these values of an azimuthal angle improves the measurement accuracy.

Any part of the above embodiment or any detail discussed with respect to the above embodiments may be combined with any part of the below embodiments.
A thirteenth embodiment comprises a system comprising the sample cell arrangement of any one of the first embodiment to the ninth embodiment and the holding device of any one of the tenth embodiment to the twelfth embodiment.

As an advantage, the combination of the above discussed embodiments of a sample arrangement and the above discussed embodiments of a holding device provides a stable system enabled to take more accurate measurements a comparatively low system size.

Any part of the above embodiment or any detail discussed with respect to the above embodiments may be combined with any part of the below embodiments.

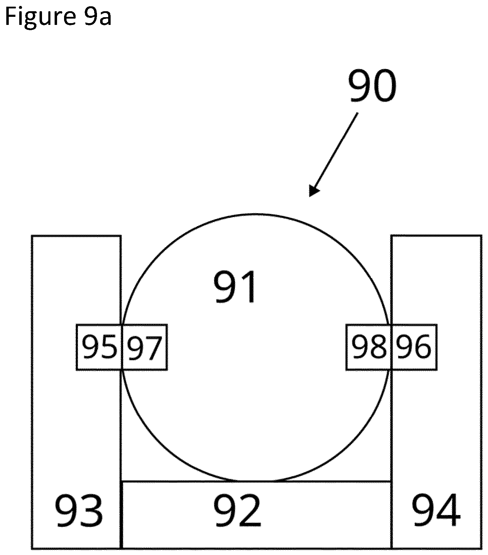

Figure 9a shows a holding system according to a fourteenth embodiment of the present invention comprising a holding system 90 for a sample cell 91, the holding system comprising a sample cell centering device 92 configured to receive the sample cell, a first sample cell adjustment part 93 comprising an outlet and a first docking part 95, a second sample cell adjustment part 94, comprising an inlet and a second docking part 96, the sample cell centering device 92 being connectable to the first sample cell adjustment part, the sample cell centering device being connectable to the second sample cell adjustment part, and the sample cell centering device being configured such that a sample cell that is placed on the sample cell centering device is fixed at a location on the sample cell centering device, the first docking part being configured such that, in response to the first sample cell adjustment part being connected to the sample cell centering device while the sample cell is being placed on the sample cell centering device, an inlet 97 of the sample cell is connected to the outlet of the first sample cell adjustment part 93, and the second sample cell adjustment part 94 being configured such that, in response to the second sample cell adjustment part being connected to the sample cell centering device while the sample cell is being placed on the sample cell centering device, an outlet 98 of the sample cell is connected to an inlet of the second sample cell adjustment part 94.

The sample cell 91 may be defined as discussed throughout the above embodiments.

The sample cell centering device 92 may be a retaining means according to the tenth to twelfth embodiment.

The first sample cell adjustment part 93 may be a first fixing part 114 according to the tenth to twelfth embodiment.

The second sample cell adjustment part 94 may be a second fixing part 115 according to the tenth to twelfth embodiment.

The first docking part 95 may refer to a part of the first sample cell adjustment part that is configured such that the first docking part and an exterior surface, or a part of the exterior surface, of the sample cell can achieve a form fit. For example, the first docking part may be configured such that its shape matches a shape of a part of the exterior surface. For example, the first docking part may have a ring like shape which is adapted to the ellipsoidal or spherical exterior surface of the sample cell. The first docking part may comprise the outlet of the first docking part.

The second docking part 96 may refer to a part of the second sample cell adjustment part that is configured such that the second docking part and an exterior surface, or a part of the exterior surface, of the sample cell can achieve a form fit. For example, the second docking part may be configured such that its shape matches a shape of a part of the exterior surface. For example, the second docking part may have a ring like shape which is adapted to the ellipsoidal or spherical exterior surface of the sample cell. The second docking part may comprise the inlet of the second docking part.

The inlet 97 may be an inlet portion of a bore as discussed throughout the above embodiments, for example, as discussed as the first embodiment.

The outlet 98 may be an outlet portion of a bore as discussed throughout the above embodiments, for example, as discussed as the first embodiment.

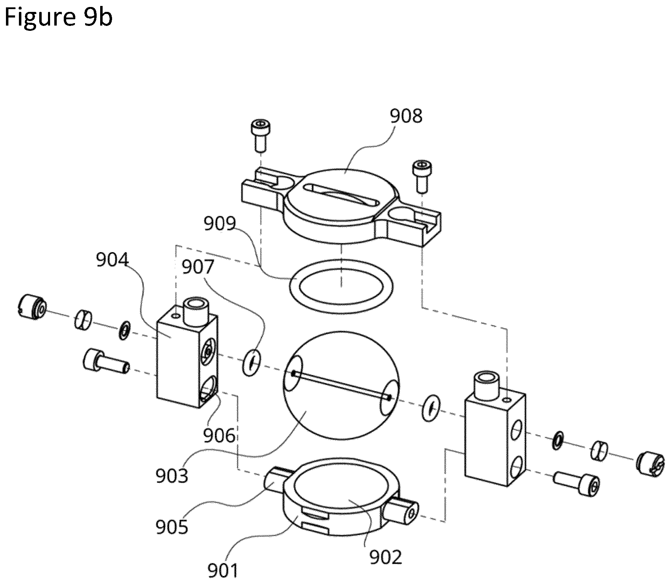

Figure 9b shows another example of a holding system according to the fourteenth embodiment. The holding system comprises a sample cell centering device 901, a sample cell 903, a first sample cell adjustment part and a second sample cell adjustment part 904.

The sample cell centering device 901 may comprise a concave cavity, a concave spherical cavity, or a concave ellipsoidal cavity 902. The concave cavity may be referred to as a spherical holding part. The sample cell centering device 901 may further comprise a fastening means 905, for example, a spring or a suspension, or a nut. The sample cell centering device may comprise a first fastening means and a second fastening means.

Moreover, the sample cell 903 may comprise a bore, an inlet portion, and an outlet portion as discussed throughout the above embodiments. The sample cell may comprise a first docking area and a second docking area. A docking area may refer to a part of the surface of the sample, where the sample cell is processed such that a flat surface is formed, instead of a curved surface. The flat surface may be perpendicular to the bore. The flat surface may be shaped like a circle, or circular. The center of a flat surface may coincide with the inlet of the bore or the outlet of the bore.

The first sample cell adjustment part 904 may comprise a nut 906, wherein the nut 906 of the first sample cell adjustment part 904 may be configured such that a screw can be inserted into the first nut 905 of the sample cell centering device 901 through the nut of the first sample cell adjustment part 904. The first sample cell adjustment part may comprise an upper bore. The first sample cell adjustment part 904 may comprise a bore that is configured such that a first docking part 907 can be inserted into the bore. The first docking part 907 may be an o-ring, a toric joint, or a packing.

The second sample cell adjustment part may comprise a nut, wherein the nut of the second sample cell adjustment part may be configured such that a screw can be inserted into the second nut of the sample cell centering device 901 through the nut of the second sample cell adjustment part. The second sample cell adjustment part may comprise an upper bore. The second sample cell adjustment part may comprise a bore that is configured such that a second docking part can be inserted into the bore. The second docking part 907 may be an o-ring, a toric joint, or a packing.

The holding system may further comprise a cover 908. The cover may be referred to as a lid. The cover may comprise a first nut and a second nut. The first nut may be configured such that a screw can be inserted through the first nut into the upper bore of the first sample cell adjustment part. The second nut may be configured such that a screw can be inserted through the second nut into the upper bore of the second sample cell adjustment part. The cover may comprise a bore, wherein the bore is configured such that a third docking part 909 can be inserted into the bore. The third docking part 909 may be an o-ring, a toric joint, or a packing. The bore of the cover 908 may be configured such that it faces the sample cell if the cover 908 is attached to the first sample cell adjustment part and the second sample cell adjustment part by inserting screws through the first nut and second nut of the cover 908 into the upper nuts of the first and second sample cell adjustment part.

The system according to this embodiment provides for an easy way of assembling a holding device for a sample cell or a sample cell arrangement. Specifically, the sample cell may be placed on the sample cell centering device. Since the sample cell has an ellipsoidal surface, or a spherical surface, the sample cell is fixed at a position by the concave cavity. Then, the first sample cell adjustment part and the second sample cell adjustment part each may be connected to sample cell centering device. They may each be connected by inserting a screw through the respective nuts of the first and second sample cell adjustment part into the first nut and the second nut of the sample cell centering device. While connecting the sample cell adjustment parts and the sample cell centering device, the first docking part 907 may form a frictional connection with the first docking area of the sample cell. For example, an o-ring that is placed within the bore of the first sample cell adjustment part may connect to a circular first flat surface of the sample cell, forming a frictional connection. Moreover, the second docking part may form a frictional connection with the second docking area of the sample cell. For example, an o-ring that is placed within the bore of the second sample cell adjustment part may connect to a circular second flat surface of the sample cell, forming a frictional connection. After connecting the sample cell adjustment parts and the sample cell centering device, the cover 908 may be placed on top of the sample cell and fastened to the first and second sample cell adjustment parts by inserting a screw through the first and second nut of the cover into the respective upper nuts of the first and second sample cell adjustment device. When placing the cover 908 on top of the sample cell, the third docking part 909, for example, an o-ring and surface of the sample cell may form a frictional connection. Thereby, the sample cell is fixed at a position.

Any part of the above embodiment or any detail discussed with respect to the above embodiments may be combined with any part of the below embodiments.

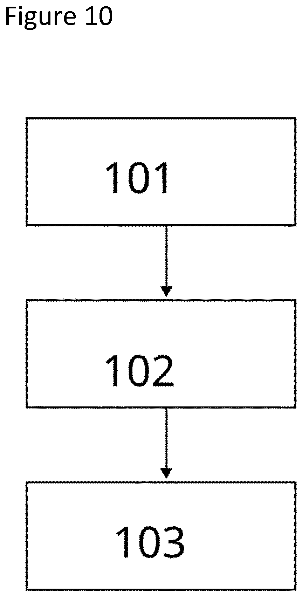

Figure 10 shows a method for assembling a holding system according to a fifteenth embodiment of the present invention comprising a method for assembling the holding system of the fourteenth embodiment, comprising the steps of placing, 101, a sample cell or the sample cell arrangement of any one of the first embodiment to the ninth embodiment on the sample cell centering device,
after the placing, connecting, 102, the first sample cell adjustment part to the sample cell centering device, and connecting, 103, the second sample cell adjustment part to the sample cell centering device.

Assembling the holding system may mean constructing the holding system from its individual components, or it may mean building the holding system by combining its elements. The individual components or elements may comprise the sample cell centering device, 92, the first sample cell adjustment part, 93, and the second sample cell adjustment part, 94, of the fourteenth embodiment.

Placing the sample cell or the sample cell arrangement on the sample cell centering device may be rephrased as setting the sample cell or the sample cell arrangement on top of the sample cell centering device, or it may mean inserting the sample cell or the sample cell arrangement into a concave cavity of the sample cell centering device, or it may mean positioning or embedding the sample cell or the sample cell arrangement within a hollow space provided by the concave cavity of the sample cell centering device. Alternatively, placing the sample cell or the sample cell arrangement on the sample cell centering device may mean placing the sample cell or sample cell centering device over the concave cavity of the sample cell centering device, or that the concave cavity of the sample cell centering device is covered by the sample cell or the sample cell arrangement. For example, a sample cell having a spherical exterior surface may be placed over a circular concave cavity of the sample cell centering device.

As indicated by arrows, step 103 is performed after step 102, and step 102 is performed after step 101. However, step 102 may be performed after step 103, and step 103 may be performed after step 101.

Connecting a sample cell adjustment part to a sample cell centering device may mean coupling the sample cell adjustment part to the sample cell centering device together, or interfacing the sample cell adjustment part with the sample cell centering device, or establishing a connection between the sample cell adjustment part and the sample cell centering device.

The method according to this embodiment provides for an easy way of assembling a holding device for a sample cell or a sample cell arrangement.

Any part of the above embodiment or any detail discussed with respect to the above embodiments may be combined with any part of the below embodiments.

## Claims

1. A sample cell arrangement comprising a sample cell and a set of optical detectors, wherein:
the sample cell includes a bore along a diameter of the sample cell, the bore being configured to hold the suspension;
the sample cell has an exterior surface, wherein the exterior surface is a surface of revolution about a normal axis normal to a horizontal plane including the bore, and the surface of revolution is a surface of an ellipsoid; and
each of the optical detectors is positioned at a position defined by a radius, an azimuthal angle, and a polar angle, wherein
the radius is a distance along a radial line connecting a position of an optical detector and a center of the sample cell, the radius being larger than a distance between the center of the sample cell and the exterior surface of the sample cell,
the polar angle is an angle between the radial line and a normal line connecting the center of the sample cell and a top pole of the ellipsoid,
the azimuthal angle is an angle between a projection line connecting the center of the sample cell and a projection of a position of an optical detector onto the horizontal plane, and a bore line connecting the center of the sample cell and an outlet of the bore.

2. The sample cell arrangement of claim 1, wherein the exterior surface is a surface of a sphere.

3. The sample cell arrangement of any one of claims 1 and 2, wherein the set of optical detectors comprises
a first subset of optical detectors, and
a second subset of optical detectors, wherein, preferably, the number of optical detectors included in the first subset is equal to the number of optical detectors included in the second subset.

4. The sample cell arrangement of claim 3, wherein
the polar angle defining the position of each of the optical detectors included in the first subset is selected from a range of 70 degrees to 88 degrees, preferably 80 degrees to 86 degrees, most preferably 82 degrees to 84 degrees, and
the polar angle defining the position of each of the optical detectors included in the second subset is selected from a range of 92 degrees to 110 degrees, preferably 94 degrees to 100 degrees, most preferably 96 degrees to 98 degrees.

5. The sample cell arrangement of any one of claims 3 and 4, wherein
the optical detectors included in the first subset of optical detectors are placed along a first ring defined by a fixed first radius, a fixed first polar angle, and a variable azimuthal angle, and
the optical detectors included in the second subset of optical detectors are placed along a second ring defined by a fixed second radius, a fixed second polar angle, and a variable azimuthal angle.

6. The sample cell arrangement of any one of claims 3 and 4, wherein
the azimuthal angle defining the position of each of the optical detectors included in the first subset of optical detectors is selected from a range of 10 degrees to 170 degrees and -10 degrees to -170 degrees, preferably 50 degrees to 130 degrees and -50 degrees to -130 degrees, most preferably 70 to 110 degrees and - 70 degrees to -110 degrees, and
the azimuthal angle defining the position of each of the optical detectors included in the second subset of optical detectors is selected from a range of 10 degrees to 170 degrees and -10 degrees to -170 degrees, preferably 50 degrees to 130 degrees and -50 degrees to -130 degrees, most preferably 70 to 110 degrees and - 70 degrees to -110 degrees.

7. The sample cell arrangement of any one of claims 3 to 6, further comprising
a first mounting holding the first subset of optical detectors, and
a second mounting holding the second subset of optical detectors, wherein
the first mounting is a part of a holding device, and
the second mounting is a part of the holding device.

8. The sample cell arrangement of one of claims 1 to 7, further comprising
Another optical detector, wherein
the azimuthal angle that defines the position of the other optical detector is substantially 0 degrees,
the polar angle that defines the position of the other optical detector is substantially 90 degrees, and the
radius is larger than a distance between the center of the sample cell and the exterior surface of the sample cell.

9. The sample arrangement of any one of claims 1 to 8, wherein the diameter of the bore is selected from a range of 0.5 millimeters to 3.0 millimeters, preferably 0.8 millimeters to 1.2 millimeters.

10. A holding device comprising:
retaining means for holding a sample cell, the sample cell having an exterior surface, wherein the exterior surface is a surface of an ellipsoid,
an inlet for inserting a suspension into a bore of the sample cell, and an outlet for receiving the suspension out of the bore of the sample cell, the position of the inlet and the position of the outlet defining a straight bore line connecting the inlet and the outlet, and a normal axis normal to a horizontal plane containing the bore line,
a first mounting for holding a first subset of optical detectors, wherein the first mounting is configured such that each of the optical detectors included in the first subset can be held at a respective position defined by a radius, an azimuthal angle, and a polar angle, and
a second mounting for holding a second subset of optical detectors, wherein the second mounting is configured such that each of the optical detectors included in the second subset can be held at a respective position defined by a radius, an azimuthal angle, and a polar angle, wherein
the radius is a distance along a radial line connecting a position of an optical detector and a center of the bore line, the radius is larger than a distance between the center of the bore line and the exterior surface of the sample cell,
the polar angle is an angle between the radial line and the normal axis,
the azimuthal angle is an angle between a projection line connecting the center of the bore line and a projection of a position of an optical detector onto the horizontal plane, and a line connecting the center of the bore line and the outlet.

11. The holding device of claim 10, wherein
the polar angle defining the position of each of the optical detectors included in the first subset is selected from a range of 70 degrees to 88 degrees, preferably 80 degrees to 86 degrees, most preferably 82 degrees to 84 degrees, and
the polar angle defining the position of each of the optical detectors included in the second subset is selected from a range of 92 degrees to 110 degrees, preferably 94 degrees to 100 degrees, most preferably 96 degrees to 98 degrees.

12. The holding device of any one of claims 10 and 11, wherein
the azimuthal angle defining the position of each of the optical detectors included in the first subset of optical detectors is selected from a range of 10 degrees to 170 degrees and -10 degrees to -170 degrees, preferably 50 degrees to 130 degrees and -50 degrees to -130 degrees, most preferably 70 to 110 degrees and - 70 degrees to -110 degrees, and
the azimuthal angle defining the position of each of the optical detectors included in the second subset of optical detectors is selected from a range of 10 degrees to 170 degrees and -10 degrees to -170 degrees, preferably 50 degrees to 130 degrees and -50 degrees to -130 degrees, most preferably 70 to 110 degrees and - 70 degrees to -110 degrees.

13. A system comprising the sample cell arrangement of any one of claims 1 to 9 and the holding device of any one of claims 10 to 12.

14. A holding system for a sample cell, the holding system comprising:
a sample cell centering device configured to receive the sample cell;
a first sample cell adjustment part comprising an outlet and a first docking part;
a second sample cell adjustment part comprising an inlet and second docking part;
the sample cell centering device being connectable to the first sample cell adjustment part, the sample cell centering device being connectable to the second sample cell adjustment part, and the sample cell centering device being configured such that a sample cell that is placed on the sample cell centering device is fixed at a location on the sample cell centering device;
the first docking part being configured such that, in response to the first sample cell adjustment part being connected to the sample cell centering device while the sample cell is being placed on the sample cell centering device, an inlet of the sample cell is connected to the outlet of the first sample cell adjustment part, and
the second docking part being configured such that, in response to the second sample cell adjustment part being connected to the sample cell centering device while the sample cell is being placed on the sample cell centering device, an outlet of the sample cell is connected to the inlet of the second sample cell adjustment part.

15. Method for assembling the holding system of claim 14, comprising the steps of:
placing a sample cell or the sample cell arrangement of any one of claims 1 to 9 on the sample cell centering device,
after the placing, connecting the first sample cell adjustment part to the sample cell centering device, and connecting the second sample cell adjustment part to the sample cell centering device.
